# EUROPEAN PATENT APPLICATION

(11) **EP 1 559 749 A1**
(43) Date of publication of application: **03.08.2005**
(21) Application number: 03753971.5
(22) Date of filing: 30.09.2003
(51) Int. Cl.: C08L 77/00, C08L 101/00, C08J 5/18, B05B 15/04

(54) **MASKING MATERIAL**

(30) Priority: 29.10.2002 JP 2002314171
(71) Applicant: Nagoya Oilchemical Co., Ltd., Tokai-shi, Aichi 476-0001 (JP)
(72) Inventor: OGAWA, Masanori, Nagoya Oilchemical Co., Ltd., Tokai-shi, Aichi 476-0001 (JP); ITO, Kuninori, Nagoya Oilchemical Co., Ltd., Tokai-shi, Aichi 476-0001 (JP)
(74) Representative: VOSSIUS & PARTNER
(86) International application number: PCT/JP2003/012556
(87) International publication number: WO 2004/039890

(57) **Abstract**

The object of the present invention is to provide a masking member to protect a prescribed part of an article from coating, wherein said masking member has excellent heat resistance and moldability.

As for the materials comprising said masking member (11,21,31,41,51), a polymer alloy, containing an engineering plastic, a polyamide, and a compatibilizer is used. In said polymer alloy, the weight ratio of said engineering plastic to said polyamide is set to be in the range of between 20:80 and 80:20, with said compatibilizer being added in an amount of between 0.01 and 50 parts by weight to 100 parts by weight of the sum of said engineering plastic and said polyamide

## Description

### FIELD OF THE INVENTION

The present invention relates to a masking member used to protect a part of an article to from coating.

### BACKGROUND OF THE INVENTION

Prior to coating, a masking member is attached to the part( part to be masked) of an article to be coated, to protect said part from coating. Said masking member may be removed from said part after coating, drying and curing by heating it to dissipate the fluidity of its coating film. Accordingly, since said masking member should have resistance to the above mentioned coating process heat treatment, a masking member made of an engineering plastic such as polyphenylene ether, or the like, having a good heat resistance, has been provided(Patent Literature 1). Said masking member, made of engineering plastic, is heat resistant at temperatures higher than 150°C, and can be repeatedly used even in the coating process including high temperature heat treatment. Further, a polyamide is added to the material of said masking member to improve its moldability (Patent Literature 2)
Patent Literature 1 ; TOKKAIHEI 05-261323
Patent Literature 2 ; TOKKAI 2002-187961

However, said engineering plastic such as polyphenylene ether, or the like, has poor compatibility with a polyamide, and the effect of said polyamide added to said engineering plastic, to improve the moldability of said engineering plastic, has not been sufficiently utilized.

### DISCLOSURE OF THE INVENTION

To solve said problem, the present invention provides a masking member(11,21,31,41,51) made of a polymer alloy containing an engineering plastic, a polyamide and a compatibilizer, wherein said engineering plastic and said polyamide are mixed together with a weight ratio of between 20:80 and 80:20, with said compatibilizer being added in an amount of between 0.01 and 50 parts by weight to 100 parts by weight of the sum of said engineering plastic and said polyamide.

Further, the present invention provides a masking member(11,21,41,51) made of a polymer alloy containing a compatibilized engineering plastic and a polyamide, wherein said compatibilized engineering plastic and said polyamide are mixed together with a weight ratio of between 20:80 and 80:20.

Furthermore, a rubber and/or elastomer may be added to said polymer allo, wherein said rubber and/or elastomer is(are) added to said polymer alloy commonly in an amount of between 1 and 50 parts by weight to 100 parts by weight of the sum of said engineering plastic and polyamide.

Said engineering plastic is preferably polyphenylene ether or a modified polyphenylene ether, with said polyamide preferably being nylon6, and further, said rubber and/or elastomer is preferably a styrene-hydrogenated polyolefin-styrene block copolymer.

It is preferable that said masking member(11,21,31,41,51) is manufactured by vacuum and/or pressure forming a polymer alloy sheet, the thickness of said polymer alloy preferably being between 0.1 and 1.5mm.

### BRIEF DESCRIPSION OF THE DRAWINGS

Figs.1 to 4 relate to the first embodiment of the present invention.

Fig.1 is a perspective view of a masking member, and the pillar to which said masking member is attached.

Fig.2 is a sectional view along the A-A line in Fig. 4 illustrating the provisional attaching of said masking member to said pillar.

Fig.3 is a sectional view along the A-A line in Fig.4 illustrating the final attaching of said masking member to said pillar.

Fig.4 is a perspective view illustrating a case where said masking member is attached to said pillar.

Fig.5 relates to the second embodiment, and is a perspective view of the masking member and pillar to which said masking member is attached.

Figs. 6 to 8 relate to the third embodiment.

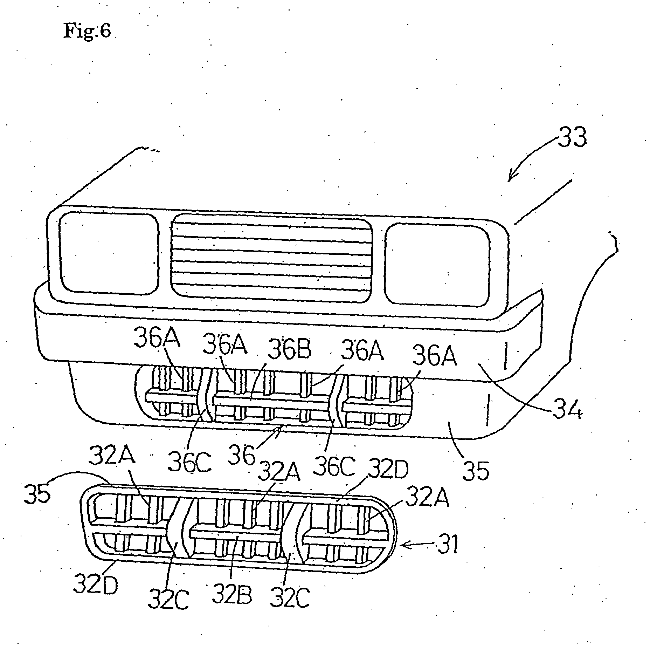

Fig.6 is a perspective view of a masking member, and the front bumper of the car to which said masking member is attached.

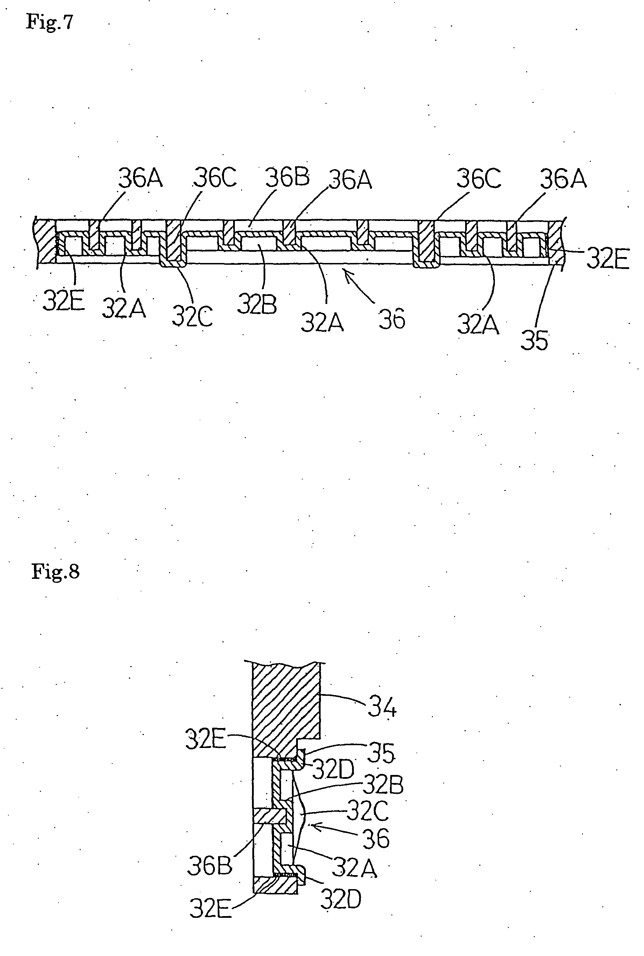

Fig.7 is a side-sectional view illustrating a case where said masking member is attached to said bumper.

Fig.8 is a cross-sectional view illustrating a case where said masking member is attached to said bumper.

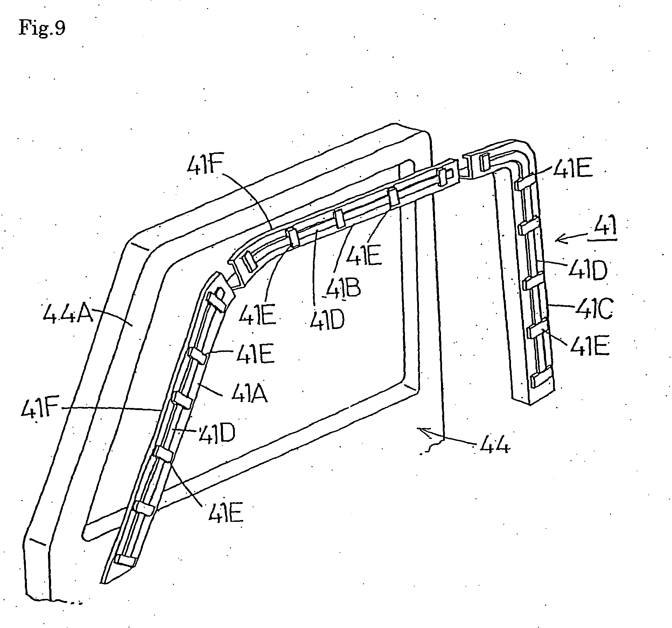

Figs.9 to 12 relate to the fourth embodiment of the present invention.

Fig.9 is a perspective view of a masking member, and the door window frame of the car to which said masking member is attached.

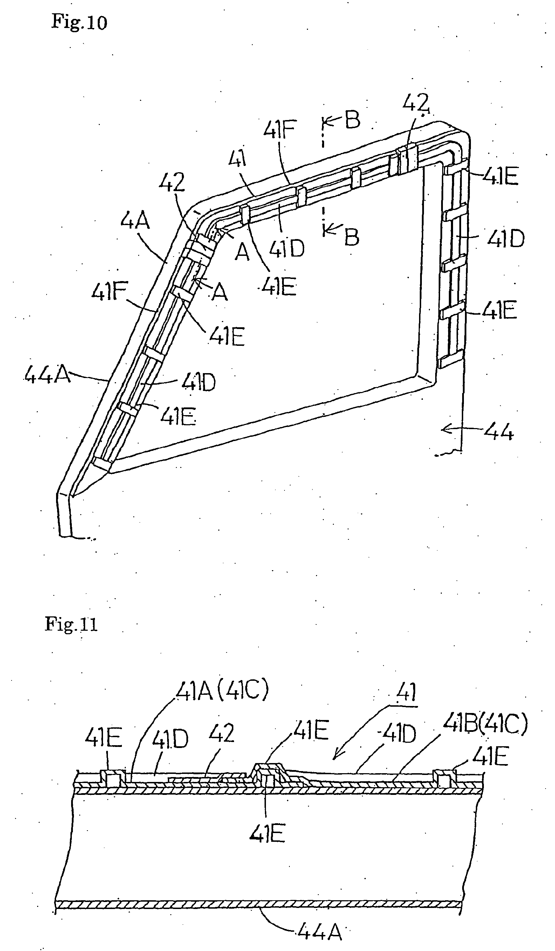

Fig. 10 is a perspective view illustrating a case where said masking member is attached to said window frame.

Fig.11 is a sectional view along the A-A line in Fig. 10.

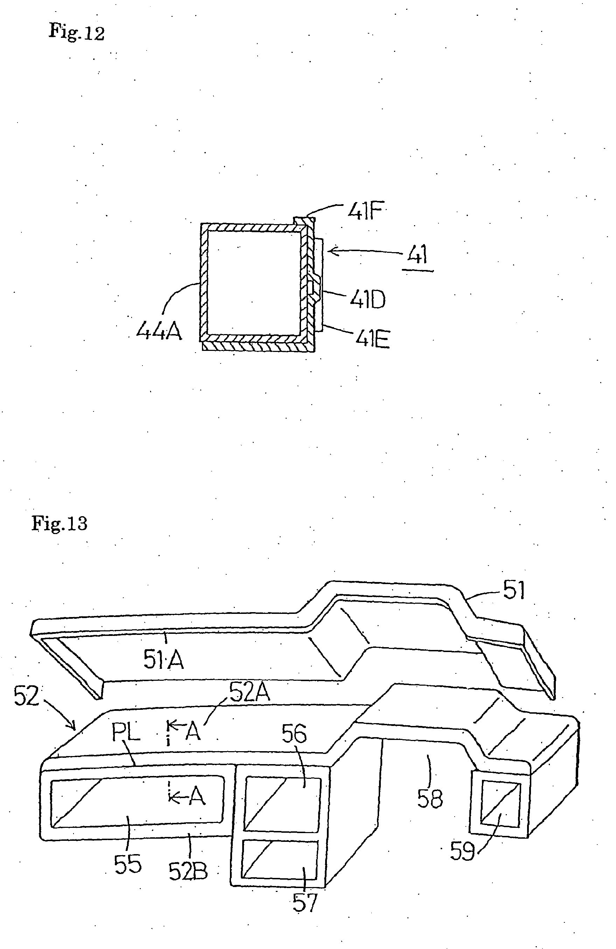

Fig.12 is a sectional view along the B-B line in Fig. 10.

Figs.13 to 17 relate to the fifth embodiment of the present invention.

Fig.13 is a perspective view of the masking member, and the instrument panel of a car before coating.

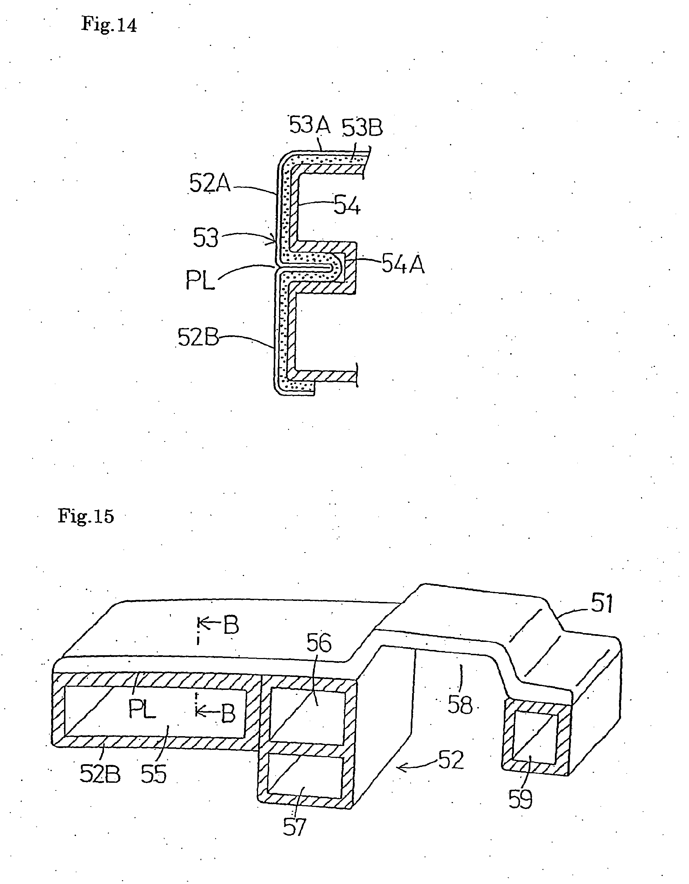

Fig. 14 is a sectional view along the A-A line in Fig. 13.

Fig.15 is a perspective view illustrating said instrument panel to which said masking member is attached after coating.

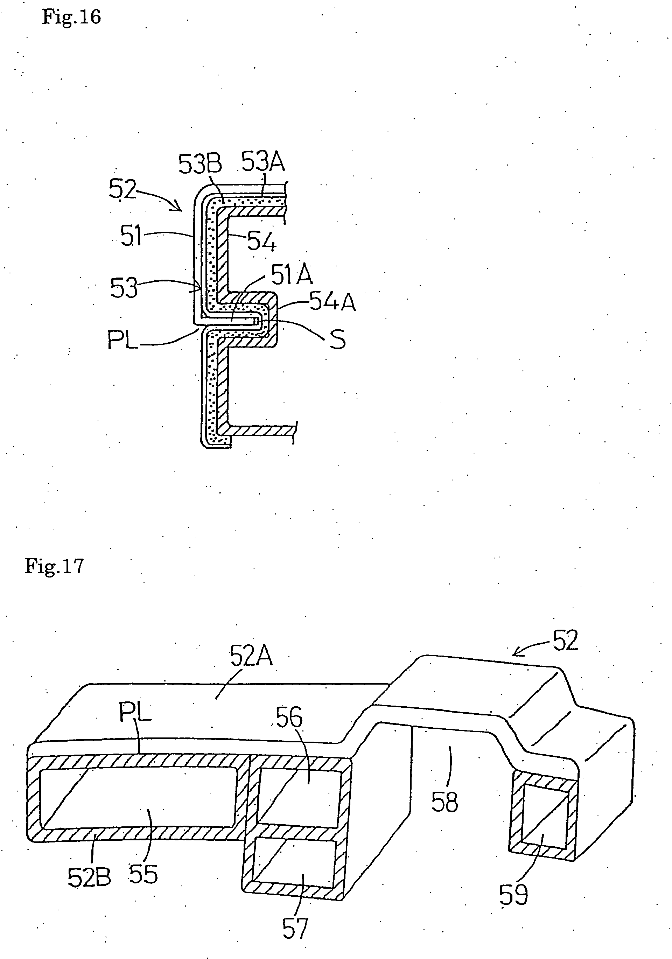

Fig.16 is a sectional view along the B-B line in Fig.15.

Fig.17 is a perspective view of said instrument panel coated in two colors.

### DESCRIPTION OF NOTATIONS

11,21,31,41,51 masking member

### DETAILED DESCRIPTION AND PREFERRED EMBODIMENT OF THE INVENTION

The present invention is precisely described below.

The engineering plastic used in the present invention is such as: a thermoplastic-type engineering plastic chosen from among polysulfone(PSF), polyethersulfone(PES), polyphenylene ether(PPE), modified polyphenylene ether(modified PPE), polyphenylene sulfide(PPS), polyetheretherketone(PEEK), polyamideimide(PAI), polyetherimide(PEI), or methylpentene copolymer(TPX).

Two or more kinds of said engineering plastic may be mixed together in the present invention. A preferable engineering plastic may be a PPE or modified PPE, which has good moldability.

Said modified PPE is of a type to which styrenic monomer(s) such as styrene, α -methylstyrene, α -ethylstyrene, α -methylvinyltoluene, α -methyldialkylstyrene, o,m or p-vinyltoluene, o-ethylstyrene, p-ethylstyrene, 2,4-dimethylstyrene, o-chlorostyrene, p-cholorostyrene, o-bromstyrene, 2,4-dichlorostyrene,2-choloro-4-methylstyrene, 2, 6-dichlorostyrene, vinylnaphthalene, vinylanthracene, or the like, is(are) graft-copolymerized, or a polymer alloy in which styrenic resin(s) such as polystyrene, styrene-acrylonitrile resin, acrylonitrile-butadiene-styrene resin(ABS), high impact polystyrene(HIPS), or the like, is(are) mixed into said PPE.

Said engineering plastic used in the present invention may be compatibilized, to make it more compatible with a polyamide. Said compatibilized engineering plastic may be such as a modified engineering plastic wherein the end of said engineering plastic molecule is modified with a functional group which is reactive with an amino group, such as an epoxy group, carboxyl group, acid anhydride group, or the like.

The method of introducing said functional group to the end of said engineering plastic molecule can be conducted using a well known method. Said method for the introduction of said functional group to the end of said engineering plastic, for instance, the method for the introduction of an epoxy group to the end of a polyphenylene ether molecule is described in Tokkaisho 63-125525.

Further, for instance, the method for the introduction of a carboxyl group or acid anhydride group to the end of a polyphenylene ether molecule is described in Tokuhyosho62-500456.

Said compatibilized engineering plastic may be used together with uncompatibilized engineering plastic in said polymer alloy of said masking member of the present invention.

In the present invention, a polyamide is added to said engineering plastic.

Said polyamide is such as: poly(tetramethylene adipamide) (nylon 46), poly(hexamethylene adipamide) (nylon 66), polypyrrolidone (nylon 4), poly caprolactam (nylon 6), polyheptolactam (nylon 7), polycaprilactam (nylon 8), polynonanolactam (nylon 9), polyundeca 1 lactam (nylon 11), polydodeca 1 lactam (nylon 12), polyhexamethylene azelaic acid amide (nylon 69), polyhexamethylene sebacic acid amide (nylon 610), polyhexamethylene phthalamide (nylon 6iP), polyhexamethylene terephthalamide, polyhexamethyleneisophthalamide, polytetramethyleneisophthalamide, poly(m-xylene adipamide), nylon MSD6, polyamide consisting of hexamethylenediamine and n-dodecanedioic acid (nylon 612), polyamide consisting of dodecamethylenediamine and n-dodecanedioic acid (nylon 1212), hexamethylene adipamide/caprolactam (nylon66/6), hexamethylene adipamide/hexamethyleneisophthalamide (nylon66/ nylon 6iP), hexamethylene adipamide/hexamethyleneterephthalamide (nylon66/nylon 6T), trimethylhexamethylene oxide/hexamethylene oxide (nylontrimethyl-62/62), hexamethylene adipamide/hexamethylene azelaic acid amide (nylon66/ nylon69), hexamethylene adipamide/hexamethylene azelaic acid amide/caprolactam (nylon66/ nylon69/nylon6), poly(capronamide/hexamethylene sebacic acid amide) (nylon6/610), poly(capronamide/hexamethylenedodecanoic acid amide) (nylon6/612), nylonMXD6, poly(capronamide/hexamethyleneisophthalamide) (nylon6/6I), aromatic polyamide or the like. Two or more kinds of said polyamide may be mixed together in the present invention.

Preferable polyamides are nylon 6, nylon 66, nylon 610, nylon11 and nylon12. Said polyamides give toughness to said polymer alloy to ease the process of deep drawing by vacuum and/or pressure forming.

Further, a polystyrene may be used with a polyamide or instead of a polyamide in the present invention.

The polystyrene used in the present invention includes both a general type and high impact type, of which the high impact type may be more preferable. A compatibilizer is added to said polymer alloy in the present invention to improve the compatibility of each component.

Since said compatibilizer agent consists of a compound having compatibility with each component of said polymer alloy, said compatibilizer provides for an uniform mixing situation for said polymer alloy intermediating between each component of said polymer alloy. Accordingly, the characteristics of each component in said polymer alloy effectively appear to give said polymer alloy both remarkably excellent heat resistance and moldability, so that a masking member having a complex shape is easily manufactured by vacuum forming or the like.

A well known compatibilizer may be used in the present invention, for instance, said compatibilizer for polymer alloy of an aromatic engineering plastic such as PPE, modified PPE, PPS or the like, and a polyamide may be such as(a) a compound containing both(i) ethylenic carbon-carbon double bond or carbon-carbon triple bond, and (ii) carbonic acid, acid anhydride, acid amide, imide, carbonic acid ester, amine, or hydroxyl group; (b) liquid diene polymer; (c) epoxy compound; (d) polycarbonic acid or a derivative thereof; (e)oxidized polyolefine wax; (f) compound containing acyl functional group; (g) chloroepoxy triazine compound; and(h) trialkyl amine salt of maleic acid or fumaric acid, or the like.

Said compatibilizers(a) to (h) are precisely disclosed in Tokkaihei09-12497, and each compatibilizer (a) to (h) is further disclosed in US4,315,086(concerned with (a), (b) and (c)), US4,873,286(concerned with (d)), US4,659,760(concerned with (e)), US4,642,358 and

US4,600,741(concerned with (f)), US4,895,945, US5,096,979, US5,089,566 and US5,041,504 (concerned with (g)), US4,755,566 (concerned with (h)).

Usually, said compatibilizer is added in an amount of between 0.01 and 50 parts by weight to 100 parts by weight of the sum of said engineering plastic and said polyamide.

Said rubber and elastomer used in said polymer alloy of the present invention may be such as, synthetic rubber such as acrylic rubber, butyl rubber, silicone rubber, urethane rubber, fluoride type rubber, polysufide type rubber, graft modified rubber, butadiene rubber, isoprene rubber, chloroprene rubber, polyisobutylene rubber, polybutene rubber, isobutene-isoprene rubber, acrylate-butadiene rubber, styrene-butadiene rubber, acrylonitrile-butadiene rubber, pyridine-butadiene rubber, styrene-isoprene rubber, acrylonitrile-chloroprene rubber, styrene-chloroprene rubber, or the like; and natural rubber; a styrenic elastomer such as styrene-butadiene-styrene block copolymer(SBS), a styrene-isoprene-styrene block copolymer(SIS), α -methylstyrene-butadiene- α -methylstyrene block copolymer( α -MeS-Bd-MeS), α -methylstyrene-isoprene- α -methylstyrene block copolymer, styrene-hydrogenated polyolefin-styrene block copolymer (SEBS,SEPS); polyolefinic elastomer, polyurethane group elastomer, polyester group elastomer, polyamide group elastomer, or the like. Said rubber and/or elastomer may be used individually or two or more kinds of said rubber and/or elastomer may be used together.

Considering resistance to climate and heat resistance, SEBS is a desirable elastomer.

In said polymer alloy of the present invention, an inorganic filler, such as calcium carbonate, magnesium carbonate, barium sulphate, calcium sulphate, calcium sulfite, calcium phosphate, calcium hydroxide, magnesium hydroxide, aluminum hydroxide, magnesium oxide, titanium oxide, iron oxide, zinc oxide, alumina, silica, diaton earth, dolomite, gypsum, talc, clay, asbestos, mica, glass fiber, carbon fiber, calcium silicate, calcium carbonate, bentonite, white carbon, carbon black, iron powder, aluminum powder, stone powder, blast furnace slag, fly ash, cement, zirconia powder or the like; natural fiber such as cotton, hemp, bamboo fiber, coconut fiber, wool or the like; organic synthetic fiber such as polyamide fiber, polyester fiber, acrylic fiber, viscose fiber, acetate fiber, vinyl chloride fiber, vinylidene choloride fiber or the like; inorganic fiber such as asbestos fiber, glass fiber, carbon fiber, ceramic fiber, metallic fiber, whisker, or the like; an organic filler such as linter, linen, sisal, wood flour, coconut flour, walnut flour, starch, wheat flour or the like, may be added to improve shape retaining property, dimensional stability, compression and tensile strength or the like. Usually, said filler may be added in an amount of between 0.01 and 100 parts by weight to 100 parts by weight of the sum of said engineering plastic and said polyamide.

If desired, one or more kind(s) of thermoplastic resin(s), such as polyolefin such as polyethylene, polypropylene, ethylene-propylene copolymer, ethylene-vinyl acetate copolymer or the like, polyvinyl chloride resin, acrylic resin, methacrylic resin, polyvinylidene chloride resin, vinyl propionate resin, styrene-butadiene copolymer, polyester resin, or the like may be mixed in with said polymer alloy.

Said polymer alloy may be colored by a pigment or dyestuff to distinguish the masking parts, and also, a plasticizer such as a DOP, DBP, or the like, an antioxidant, antistatic agent, crystallization agent, flame retardant, antiflaming agent, insecticide, antiseptic, various waxes, a lubricant, age resister, ultraviolet absorber, and a blowing agent of a chemical or capsule type, or the like may be mixed in with said polymer alloy. Two or more kinds of said agents may be mixed, and then added to said polymer alloy.

A commercial polymer alloy of polyphenylene ether and a polyamide used for the masking member of the present invention may be such as XYRON(Lynex1400), XYRON(LynexA0100), XYRON(LynexV9830)(Asahi Chemical Industry Co., Ltd.), Noril GTX-6013(GE Plastic Japan Ltd.), Lemalloy BX505, Lemalloy BX542A, Lemalloy BX528A-3, Lemalloy C61HL, Lemalloy C82HL, Lemalloy CX555A (Mitsubishi Engineering Plastics Co., Ltd.), said polymer alloy being easily available. Lemalloy B is a polymer alloy of PPE and Nylon 6, and Lemalloy C is a polymer alloy of PPE and Nylon66.

To manufacture a masking member using said polymer alloy as a material, commonly the vacuum forming or the vacuum-pressure forming method is applied, in which procedure a film or a sheet of said polymer alloy can be formed accurately and precisely into a deep drawing shape or complicated shape, readying the masking member for efficient mass production. However, pressure forming, press molding, blow molding, injection molding, or the like, may also be applied in the manufacturing of said masking member.

A sheet or an expanded sheet of thermoplastic resin, such as polyolefin such as polyethylene, polypropylene, ethylene-propylene-copolymer, ethylene-vinyl acetate copolymer, or the like, polyvinyl chloride resin, acrylic resin, methacrylic resin, poly- vinylidene chloride resin, styrenic resin, vinyl propionate resin, styrene-butadiene copolymer, polyester resin, or the like, may be laminated onto said sheet of said polymer alloy.

In order to enhance the affinity of a masking member surface made of said polymer alloy, with paint or adhesive, a surface treatment such as a corona discharge treatment, primer coating treatment, or the like, may be performed.

The primer used for the primer coating is, for example, a synthetic resin type primer, such as modified polyolefin, or olefin copolymer (e.g. chlorinated polypropylene, ethylene-vinylacetate copolymer), a synthetic rubber such as styrene-butadiene rubber, acrylnitrile-butadiene rubber, chloroprene-rubber, polybutadien, or the like; an acrylic synthetic resin, vinyl synthetic resin, an acrylic synthetic resin containing an amino group and/or amide group, a vinyl synthetic resin containing an amino group and/or amide group, an amino synthetic resin, epoxy resin or the like; and a low-molecular weight compound primer such as aluminum alcholate or an aluminum chelate agent such as aluminum isopropylate, aluminum triacetylacetonate, or the like; an alkyl metal such as 2-ethylhexyl lead, hexadecyl lithium or the like; an organotin compound such as dibutyl tin diacetate, di-n-butyl tin dioxide, or the like; a silane compound such as methylvinyl dichloro silane, or the like; a metal complex salt of a 1, 3-dicarbonyl compound such as acetylacetone lithium, acetylacetone beryllium, or the like; an organotitanium compound such as tetrabutyl titanate, or the like; a boric acid compound such as tri-n-butyl borate, triphenyl borate, or the like; a phosphate such as trioleil phosphate, tridecyl phosphate, or the like; a metal salt of a carboxylic acid such as magnesium stearate, cobalt naphtenic acid, or the like; a metal thioalcholate such as n-potassium dodecylmercapto chloride, or the like; a thiodicarboxylate such as zinc 2-ethylhexane dithiocarboxylate, or the like; a metal salt of a dithiocarbamic acid such as nickel dimethyldithiocarbamate, copper dimethyldithiocarbamate or the like; a metal salt of sulfonic acid such as nickel benzenesulfonate, or the like; an organophosphate compound such as dibutylvanadium phosphate, or the like. One or more kinds of said primer may be used together.

Said primer has an affinity with both said engineering plastic and synthetic resin other than said engineering plastic which is generally used as a paint vehicle or an adhesive for said engineering plastic. A preferable primer is an acrylic synthetic resin containing quarternary ammonium salt or a synthetic resin containing an amino group.

For the primer coating treatment, a solution or emulsion(latex) of one or more kinds of said primer is coated on the surface of said engineering plastic as the material for the masking member, and then dried.

Prior to said primer coating treatment, an affinity treatment may be exercised on the surface of said engineering plastic. Examples of said affinity treatment include flame treatment, sulfuric acid treatment, corona discharge treatment, or the like, with the surface of said engineering plastic being slightly carbonized by said treatment to obtain affinity with the other synthetic resin.

### EMBODIMENTS

### THE FIRST EMBODIMENT

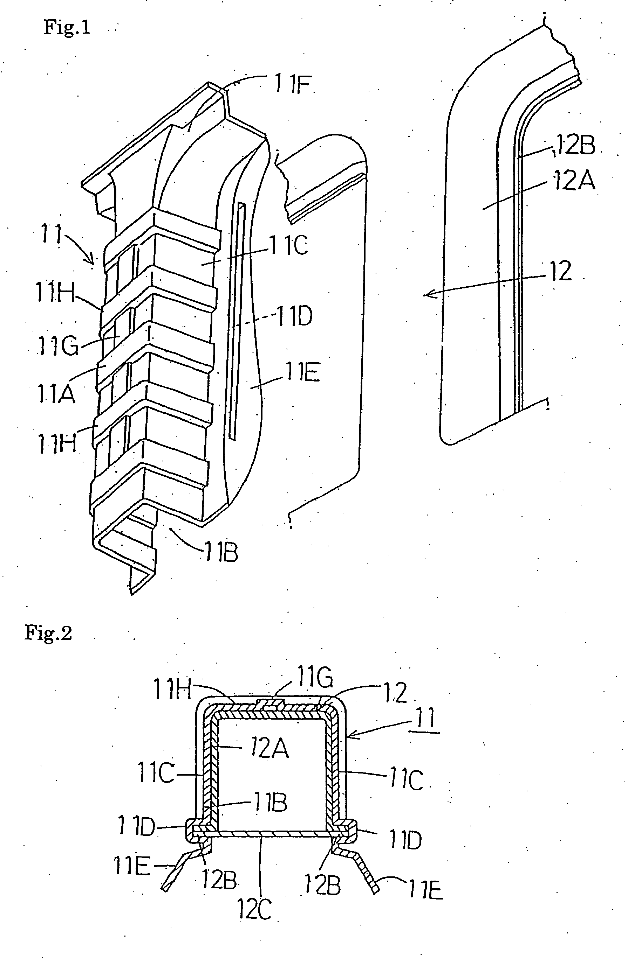

Figures 1 to 4 relate to the first embodiment of the present invention. The masking member (11) of this embodiment is used to protect pillar shaped members, such as the center pillar (12) of a car from being coated. Said masking member (11) consists of a body (11A) having a U-shape in cross section, to the inside (11B) of which the body (12A) of the center pillar (12) is to be fitted, a pair of flange grooves (11D, 11D) formed along the lower edges of the side walls (11C, 11C) of said body (11A) into which the pair of flanges(12B, 12B) from said center pillar (12) are each to be inserted, a pair of back side application parts (11E, 11E) each extending from said flange grooves(11D, 11D), and an upper side application part (11F) extending from the top of said body (11A), with a reinforcing longitudinal rib (11G) and reinforcing horizontal ribs (11H) being formed around the circumference of said body (11A). Said masking member (11) is manufactured by vacuum forming a polymer alloy sheet (thickness 0.4mm), made of a polymer alloy of PPE and a polyamide(Noril GTX-6013, GE Plastics Japan Ltd.).

As shown in Figure 2, said masking member (11) is provisionally attached to the body (12A) of said center pillar (12) by fitting said body (12A) to the inside (11B) of said body (11A) of said masking member (11), and then further inserting each the flange (12B, 12B) of said center pillar (12) into the flange grooves (11D, 11D) of said masking member (11).

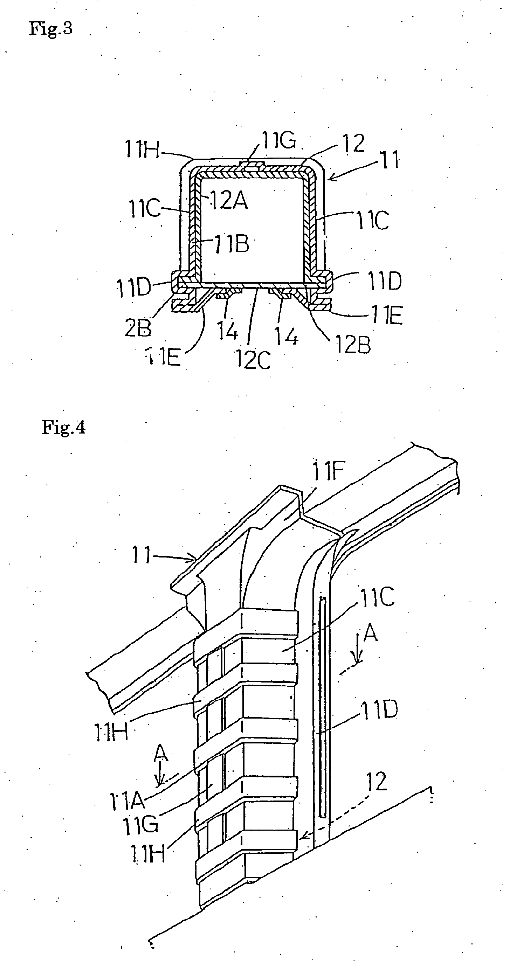

After said provisional attachment, said back side application parts (11E, 11E) are each applied to the back side panel (12C) of said center pillar (12), turning said back side application parts (11E,11E) to the rears, and said back side application parts (11E, 11E) being fixed to said back side panel (12C) with adhesive tape (14), tacks, or the like, as shown in Figure 3.

After said masking member (11) is attached to said center pillar (12) as shown in Figure 4, the car is coated with a thermosetting melanine-alkyd resin paint or the like.

### THE SECOND EMBODIMENT

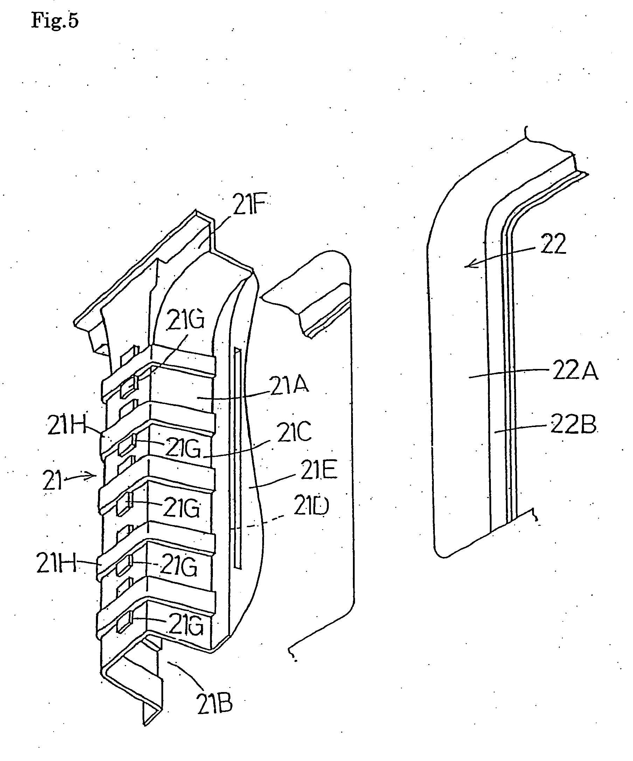

Figure 5 relates to the second embodiment of the present invention. The masking member (21) of this embodiment consists of a body (21A) having a U-shape in cross section, to the inside of which the body (22A) of a center pillar (22) is to be fitted, a pair of flange grooves (21D, 21D) formed along the lower edges of the side walls (21C, 21C) of said body (21A), into which a pair of flanges (22B, 22B) from said center pillar (22) are each to be inserted, a pair of back side application parts (21E, 21E) extending from said flange grooves (21D, 21D), and an upper side application part (21F) extending from the top of said body (21A), with a plural number of reinforcing longitudinal ribs (21G) and reinforcing horizontal ribs (21H) being formed around the circumference of said body (21A).

Being different from the first embodiment, said reinforcing longitudinal ribs (21G) are formed intermittently in this embodiment. Said masking member is manufactured by vacuum-pressure forming a polymer alloy sheet (thickness 0.3mm), made of polymer alloy of PPE and a polyamide(Xyron, Lynex A 1400, Asahi Chemical Industry Co., Ltd.).

In the same way as stated in the first embodiment, said masking member (21) is provisionally attached to the body (22A) of said center pillar (22) by fitting said body (22A) to the inside of said body (21A) of said masking member (21), and then further inserting each of said flanges (22B, 22B) from said center pillar (22) into the flange grooves (21D, 21D) of said masking member (21), following which the back side application parts (21E, 21E) are each applied to the back side panel of said center pillar (22), turning said back side application parts (21E, 21E) to the rear, said back side application parts (21E, 21E) being fixed to said back side panel (22), with adhesive tape, tacks, or the like.

After said masking member (21) is attached to said center pillar (22), the car is coated with paint.

In the first embodiment, said masking member (11) is apt to bend horizontally along said reinforcing longitudinal rib (11G), since said rib (11G) is continuous, while in this embodiment, said masking member (21) has increased horizontal bending strength along its ribs (21G), since said ribs (21G) are intermittent.

### THE THIRD EMBODIMENT

Figures 6 to 8 relate to the third embodiment of the present invention. As shown in Figure 6, a car body (33) has a front bumper (34) and when said car body (33) is coated, the masking member (31) of this embodiment is attached to the air inlet hole (36) of the lower skirt part (35) of said front bumper (34). A plural number of reinforcing frame bars (36A, 36B) are equipped lengthwise and breadthwise, with a pair of support pillars (36C) being equipped on either side of said air inlet hole (36). Correspondingly, the frame bar grooves (32A, 32B), for the insertion of said reinforcing frame bars (36A, 36B), are equipped lengthwise and breadthwise in said masking member (31), with a pair of pillar grooves (32C) for the insertion of said support pillars (36C) being equipped on either side of said masking member (31). A flange(32D) is formed along the front of said masking member(31), further, a pressure sensitive adhesive layer (32E) is formed around the circumference of said masking member (31). Said masking member (31) is manufactured by vacuum forming a polymer alloy sheet (thickness 0.2mm) made of a polymer alloy of PPE and a polyamide(Xyron, Lynex A 0100 Asahi Chemical Industry Co., Ltd.).

Said masking member (31) is fitted to the inside of said air inlet hole (36), and each reinforcing frame bar (36A, 36B) is inserted into each frame bar groove (32A, 32B), and each support pillar (36C) is inserted into each pillar groove (32C), following which said masking member (31) is fixed to the inside of said air inlet hole (36) with its pressure sensitive adhesive layer (32E). Said pressure sensitive adhesive layer (32E) may not always be necessary in the present invention.

As described above, said masking member (31) is attached to said air inlet hole (36) of the skirt part (35), which is a masking part, after which said car body (33) is coated with a paint, following which the resulting coating film is cured by heating.

### THE FOURTH EMBODIMENT

Figures 9 to 12 relate to the fourth embodiment of the present invention. The masking member (41) of this embodiment is used to protect the window frame (44A) of a car door (44), and said masking member (41) consists of three parts (41A, 41B, 41C), each cross section of each part is L-shaped. A longitudinal reinforcing rib (41D) and cross ribs (41E) are formed in each part (41A, 41B, 41C).

Said masking member (41) is manufactured by vacuum-pressure forming a polymer alloy sheet (thickness 0.5mm) made of a polymer alloy of PPE and a polyamide(Xyron, Lynex Va9830, Asahi Chemical Industry Co., Ltd.).

In order to attach said masking member (41) to said window frame (44A) of the door (44), each part (41A, 41B, 41C) is attached to said window frame (44A), overlapping each of the connecting ends of said parts (41A, 41B, 41C), and said overlapping connecting ends are fixed with adhesive tape (42), etc. as shown in Figure10.

In this case, as for said overlapping connecting ends, a cross rib (41E) from the connecting end of one part (41A or 41B) is fitted under a cross rib (41E) from the connecting end of the other part (41B or 41C) as shown in Figure 11, with an upper edge hook part (41F) from each part (41A, 41B, 41C) being hung on the upper edge of said window frame (44A) as shown in Figure 12. After coating, said masking member (41) is removed from said window frame (44A) of the door (44). Said window frame (44A) is not coated with paint since said window frame (44A) was protected by said masking member (41).

### THE FIFTH EMBODIMENT

Figures 13 to 17 relate to the fifth embodiment of the present invention. In the front of the instrument panel (52), an installation port (55) in which a globe component is installed, installation ports (56, 57) in which an audio system is installed, an installation port (58) in which instruments are installed, and an installation port (59) in which a small articles box is installed, or the likes are provided, said instrument panel being divided into an upper section (52A) and a lower section (52B).

As shown in Figure 14, said instrument panel (52) consists of a base (54) and a surface trim (53) which is applied to the surface of said base (54), and said surface trim (53) consists of a surface layer (53A) made of a non-woven fabric, synthetic leather, or the like, and a wadding layer (53B) made of a non-woven fabric, foamed plastic sheet or the like, backed with said surface layer (53A), and further said surface layer (53A) is colored with a designated color (base color), and the thickness of said wadding layer (53B) can be elastically compressible.

Along the boundary between said upper section (52A) and said lower section (52B), a groove (54A) is formed in said base (54), with a parting line PL being formed by the inserting of said surface trim (53) into said groove (54A). Said surface trim (53) is fixed to said grooves (54A) with the thickness of wadding layer (53B) having been compressed, and then elastically rebounding.

Since said instrument panel (52) is decorated with said surface trim (53) common to both upper and lower sections, said upper section (52A) and said lower section(52B) are each the same color. Said instrument panel (52) may be installed in the car body as it is, or in a case where said instrument panel 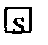 (52) and upper and lower sections (52A,52B) are different colors, a masking member (51) is used as shown in Figure 13. Said masking member (51) has a shape corresponding to said upper section (52A) of said instrument panel (52), and an engaging flange (51A) is formed around the circumference edge of said masking member (51).

As shown in Figure 15, said masking member (51) is applied to said upper section (52A), and as shown in Figure 16, is fixed by inserting said engaging flange (51A) into the slit S of said parting line PL. By inserting said engaging flange (51A) of said masking member (51) into said slit of said parting line PL, the thickness of said wadding material (51B) of said surface trim (53) is compressed, so that said engaging flange (51A) is pinched and fixed with said surface trim (53), through said wadding material 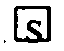 rebunding and elasticity. As described above, said masking member (51) is applied to said upper section (52A) of said instrument panel, after which said lower part (52B) is coated in a different color from said upper part (52A) by such as spray coating. After coating, said masking member (51) is removed from said upper part (52A).

In the above-described manner, said instrument panel (52), whose upper and lower sections are each coated in different colors, is easily prepared.

Said masking member (51) of this embodiment is manufactured by pressure forming or pressure molding of a polymer alloy sheet (thickness 0.4mm), made of a polymer alloy of PPE and Nylon6(Lemalloy BX505, Mitsubishi Engineering Plastics Co., Ltd.).

In the present invention, a masking member can be provided, having excellent heat and crack resistance, excellent moldability suitable for deep drawing shape and/or complicated shape, and also suitable for vacuum forming, vacuum-pressure forming or pressure forming which enables mass production. With said moldability, said masking member can be molded into any shape corresponding to the parts to be masked, and when said vacuum, vacuum pressure or pressure forming is applied, a thin polymer alloy sheet can be used, resulting in low material costs. Further, since said masking member has an affinity with the coating film of paint, said coating film is hard to peel away from said masking member, so that it is unlikely that pieces of said coating film peeling away from said masking member, will fly off to contaminate the surrounding area of said masking member. The masking member of the present invention can be used repeatedly.

### EFFECT OF THE INVENTION

The masking member of the present invention has excellent heat resistance and moldability.

### INDUSTRIAL UTILITY

The masking member of the present invention is used to protect a prescribed part of an article from being coated, said article being such as a car or the like.

## Claims

1. A masking member made of a polymer alloy containing an engineering plastic, a polyamide and a compatibilizer, wherein said engineering plastic and said polyamide are mixed together with a weight ratio of between 20:80 and 80:20, with said compatibilizer being added in an amount of between 0.01 and 50 parts by weight to 100 parts by weight of the sum of said engineering plastic and said polyamide.

2. A masking member made of a polymer alloy containing a compatibilized engineering plastic and a polyamide, wherein said compatibilized engineering plastic and said polyamide are mixed together with a weight ratio of between 20:80 and 80:20.

3. A masking member in accordance with claim 1 or 2, in which a further rubber and /or elastomer is(are) added to said polymer alloy, wherein said rubber and/or elastomer is(are) added to said polymer alloy in an amount of between 1 and 50 parts by weight to 100 parts by weight of the sum of said engineering plastic and polyamide.

4. A masking member in accordance with any claim of claims 1 to 3, wherein said engineering plastic is polyphenylene ether or a modified polyphenylene ether.

5. A masking member in accordance with any claim of claims 1 to 4, wherein said polyamide is nylon6.

6. A masking member in accordance with any claim of claims 1 to 5, wherein said rubber and/or elastomer is a styrene-hydrogenated polyolefin-styrene block copolymer.

7. A masking member in accordance with any claim of claims 1 to 6, wherein said masking member is manufactured by vacuum and/or pressure forming a polymer alloy sheet.

8. A masking member in accordance with any claim of claims 1 to 7, wherein the thickness of said polymer alloy sheet is between 0.1 and 1.5mm.
